# EUROPÄISCHE PATENTSCHRIFT

(11) **EP 3 230 135 B1**
(45) Veröffentlichungstag und Bekanntmachung des Hinweises auf die Patenterteilung: **20.03.2019**
(21) Anmeldenummer: 15801679.0
(22) Anmeldetag: 26.11.2015
(51) Int. Cl.: B60T 7/12, B60T 13/66

(54) **BERGANFAHRHILFE-SYSTEM, UND KRAFTFAHRZEUG MIT SELBIGEM**
HILL START ASSIST SYSTEM AND MOTOR VEHICLE HAVING SAME
SYSTÈME D'AIDE AU DÉMARRAGE EN CÔTE ET VÉHICULE AUTOMOBILE MUNI DUDIT SYSTÈME

(30) Priorität: 13.12.2014 DE 102014018645
(43) Veröffentlichungstag der Anmeldung: 18.10.2017
(73) Patentinhaber: WABCO GmbH, 30453 Hannover (DE)
(72) Erfinder: BINARSCH, Hans-Jürgen, 31559 Haste (DE); SCHMIDT, Detlef, 30989 Gehrden (DE); THIMM, Andreas, 31157 Sarstedt (DE); WILLMS, Jens, 30926 Seelze (DE)
(74) Vertreter: Lauerwald, Jörg
(86) Internationale Anmeldenummer: PCT/EP2015/002372
(87) Internationale Veröffentlichungsnummer: WO 2016/091357

(56) Entgegenhaltungen:
- DE-A1- 3 507 330
- DE-A1- 10 135 744
- US-A1- 2010 168 974

## Beschreibung

Die vorliegende Erfindung betrifft ein Berganfahrhilfe-System für ein Kraftfahrzeug, insbesondere ein Nutzfahrzeug ohne ABS, mit einem automatisierten Schaltgetriebe, das eine elektronische Steuerung aufweist.

Erfindungsgemäß wird unter einem automatisierten Schaltgetriebe ein sogenanntes AMT verstanden. Unter einer elektronischen Steuerung wird insbesondere eine elektronische Getriebe- und Kupplungssteuerung TCM verstanden.

Berganfahrhilfe-Systeme für Kraftfahrzeuge sind allgemein bekannt. Sie werden bei Fahrzeugen mit ABS-Systemen beispielsweise realisiert, indem das Bremssystem über die ABS-Ventile im Fall einer aktiven Berganfahrhilfesituation unabhängig vom Fahrer Bremsdruck einsteuert, so dass der Fahrer den Fuß vom Bremspedal nehmen kann, ohne dass das Fahrzeug am Berg zurückrollt. Es kommt in den bekannten Systemen zum Lösen der Bremse, sobald entweder über einen Kupplungspedalschalter oder vom automatisierten Schaltgetriebe ein Signal übermittelt wird, dass die Kupplung des Getriebes ausreichendes Drehmoment zum Anfahren übernehmen kann. Dies kann mittels Übertragung eines Analogsignals geschehen, welches beispielsweise direkt an die elektronische Steuerung des Bremssystems angeschlossen ist. In Fahrzeugen ohne ABS-System steht eine elektronische Bremssteuerung zum Ansprechen von Bremsventilen wie den ABS-Ventilen dagegen nicht zur Verfügung.

Ein derartiges Berganfahrhilfe-System ist zum Beispiel aus der US 2010 168 974 A1 bekannt.

In vielen Fahrzeugmärkten, beispielsweise in Vorder- und Zentralasien, sind Fahrzeuge, insbesondere Nutzfahrzeuge zwar mit AMT, aber noch nicht standardmäßig mit ABS ausgerüstet. Trotzdem besteht die Notwendigkeit, dort Fahrzeuge mit Berganfahrhilfe-Systemen zur Verfügung zu stellen. Die Nutzfahrzeuge bzw. Kraftfahrzeuge mit einer entsprechenden Bremsfunktion zur Berganfahrhilfe auszurüsten erfordert aufgrund vielerorts vorhandener gesetzlicher Vorgaben allerdings eine Spezifizierung dahingehend, dass die Berganfahrhilfe-Systeme den hohen Sicherheitsanforderungen für Bremssysteme genügen müssen. Dies ist kostengünstig jedoch nicht zu realisieren.

Vor diesem Hintergrund lag der vorliegenden Erfindung die Aufgabe zugrunde, ein Berganfahrhilfe-System für ein Kraftfahrzeug der eingangs bezeichneten Art bereitzustellen, welches auch ohne Vorhandensein von ABS-Systemen eine zuverlässige und kostengünstige Möglichkeit der Berganfahrhilfe bereitstellt.

Die Erfindung löst die ihr zugrunde liegende Aufgabe bei einem Berganfahrhilfe-System der eingangs bezeichneten Art mittels einer Ventilanordnung zum Anschluss zwischen einer Druckluftquelle und einer Anzahl von Bremsanlagen des Kraftfahrzeugs, um Druckluft aus der Druckluftquelle mittels Betätigung einer Bremspedaleinheit an die Bremsanlagen zu leiten, wobei die Ventilanordnung signalleitend mit der elektronischen Steuerung verbunden ist, und die elektronische Steuerung dazu eingerichtet ist, die Ventilanordnung derart zu aktivieren und zu deaktivieren, dass im deaktivierten Zustand der mittels Betätigung der Bremspedaleinheit eingesteuerte Bremsdruck unbeeinflusst an die Bremsanlagen geleitet wird, und im aktivierten Zustand ein eingesteuerter Bremsdruck an die Anzahl von Bremsanlagen geleitet und dort eingesperrt wird. Hierzu ist vorzugsweise die Ventilanordnung zum Anschluss an eine pneumatische Bremsleitung des Kraftfahrzeugs eingerichtet, wobei die pneumatische Bremsleitung eine Druckluftquelle mit einer Anzahl von Bremsanlagen verbindet und eine Bremspedaleinheit derart mit der pneumatischen Bremsleitung kommuniziert, dass mittels der Bremspedaleinheit ein Bremsdruck eingesteuert und an die Anzahl von Bremsanlagen geleitet wird. Weiter vorzugsweise ist die elektronische Steuerung zum Steuern der Ventilanordnung derart ausgebildet, dass im deaktivierten Zustand der an die Anzahl von Bremsanlagen geleitete Bremsdruck in Abhängigkeit der Betätigung der Bremspedaleinheit steigt und fällt.

Die elektronische Steuerung ist vorzugsweise zum Steuern der Ventilanordnung derart ausgebildet, dass im aktivierten Zustand eine, insbesondere mittels der Bremspedaleinheit, eingesteuerte Bremsdruckerhöhung in der pneumatischen Bremsleitung an die Anzahl von Bremsanlagen geleitet wird, während ein Druckabfall auf Seiten der Anzahl von Bremsanlagen verhindert wird.

Die Erfindung macht sich die Erkenntnis zunutze, dass es durch eine solche erfindungsgemäße Ventilanordnung möglich ist, ein ungewolltes Lösen der Bremsanlagen durch Aktivieren der Ventilanordnung zu unterbinden, während aber gleichzeitig ein manuelles Einsteuern von Bremsdruck durch den Fahrer mittels der Bremspedaleinheit weiter möglich bleibt. Da hat zur Folge, dass die elektronische Steuerung des automatisierten Schaltgetriebes keinen Eingriff in das Bremssystem als solches vornimmt, der sicherheitsrelevant und homologationsbedürftig wäre. Eine Spezifizierung des Berganfahrhilfe-Systems gemäß der Erfindung macht es somit überflüssig, das Berganfahrhilfe-System nach den Sicherheitsspezifikationen für Bremssysteme auslegen und abnehmen zu müssen. Hierdurch kann auf kostengünstige Weise eine dennoch zuverlässige Berganfahrhilfe für Fahrzeuge bereitgestellt werden, die kein ABS-System besitzen, und bei denen eine Nachrüstung eines ABS-Systems aus konstruktiven Gründen oder aus Kostengründen nicht realisierbar ist.

In einer bevorzugten Weiterbildung der Erfindung weist die Ventilanordnung ein Select-High-Ventil auf. Das Select-High-Ventil ist vorzugsweise als Doppelrückschlagventil ausgebildet.

Vorzugsweise ist das Select-High-Ventil an einer ersten Zweigstelle der pneumatischen Bremsleitung derart angeordnet, dass die Anzahl von Bremsanlagen fluidleitend entweder mit der pneumatischen Bremsleitung oder mit einer von der ersten Zweigstelle abgehenden Zweigleitung verbunden sind. Die Anzahl von Bremsanlagen umfasst eine entsprechende Anzahl von Bremszylindern, die zum Aufbau der Bremswirkung auf die Räder des Kraftfahrzeugs eingerichtet sind.

Die Ventilanordnung weist in einer bevorzugten Ausführungsform ein von der elektronischen Steuerung gesteuertes Schaltventil auf.

Weiter vorzugsweise ist die Zweigleitung an einer zweiten Zweigstelle mit der pneumatischen Bremsleitung verbunden, wobei die zweite Zweigstelle zwischen der Bremspedaleinheit und der ersten Zweigstelle angeordnet ist. Das Schaltventil ist in einer bevorzugten Ausführungsform in der Zweigleitung angeordnet und derart angesteuert, dass die Zweigleitung in dem aktivierten Zustand geschlossen ist, und in dem deaktivierten Zustand geöffnet ist. Das Schaltventil ist hierbei vorzugsweise als 2/2-Wegeventil ausgebildet, insbesondere als 2/2-Wege-Magnetventil.

In einer weiteren bevorzugten Ausführungsform der Erfindung ist die elektronische Steuerung signalleitend, vorzugsweise mittels einer Signalleitung oder dergleichen Übertragungsmitteln, mit einem Bedienmittel verbunden, insbesondere mit einem Wählschalter, und dazu eingerichtet, die Ventilanordnung auf eine Bedieneingabe hin vom deaktivierten Zustand in den aktivierten Zustand zu schalten. Vorzugsweise wird das Bedienmittel nach einem abgeschlossenen Anfahrvorgang, wenn die Ventilanordnung deaktiviert ist, zurückgesetzt. Eine erneute Aktivierung ist dann erforderlich, wenn ein erneuter Anfahrhilfewunsch besteht, was das Risiko eines unbeabsichtigten Aktivierens der Berganfahrhilfe reduziert.

Die elektronische Steuerung des erfindungsgemäßen Berganfahrhilfe-Systems ist vorzugsweise dazu eingerichtet, die Ventilanordnung mittels Übertragung eines entsprechenden Steuersignals selbsttätig vom aktivierte Zustand in den deaktivierten Zustand zu schalten, wenn zumindest eine, vorzugsweise mehrere oder sämtliche der folgenden Bedingungen erfüllt sind:
- die elektronische Steuerung empfängt ein Signal, dass ein Schaltvorgang des automatisierten Schaltgetriebes zumindest teilweise abgeschlossen ist, so dass ein vorbestimmtes Drehmoment von dem automatisierten Schaltgetriebe aufgenommen wird,
- die elektronische Steuerung empfängt ein Signal, dass sich die Ventilanordnung, vorzugsweise unmittelbar, im Anschluss an ein Lösen der Bremspedaleinheit für einen vorbestimmten Zeitraum, der beispielsweise im Bereich von 1 bis 5 Sekunden, beispielsweise 3 Sekunden, liegen kann, im aktivierten Zustand befunden hat,
- die elektronische Steuerung empfängt ein Signal, dass bedienerseitig zum Beschleunigen des Kraftfahrzeugs ein Kickdown ausgeführt wird, und
- die elektronische Steuerung empfängt ein Signal, dass eine Parkbremse des Kraftfahrzeugs betätigt wird.

In einer weiteren bevorzugten Ausgestaltung des Berganfahrhilfe-Systems ist die elektronische Steuerung dazu eingerichtet, ein Signal an das Bedienmittel zu übermitteln, wenn zumindest eine, vorzugsweise mehrere, besonders bevorzugt sämtliche der folgenden Bedingungen erfüllt sind:
- die elektronische Steuerung empfängt ein Signal, dass ein Motor des Kraftfahrzeugs sich im Leerlauf befindet,
- die elektronische Steuerung empfängt ein Signal, dass das Kraftfahrzeug still steht,
- die elektronische Steuerung empfängt ein Signal, dass die Bremspedaleinheit betätigt wird,
- die elektronische Steuerung empfängt ein Signal, dass das automatisierte Schaltgetriebe sich in ausgekoppeltem Zustand befindet,
- die elektronische Steuerung empfängt ein Signal, dass die Parkbremse des Kraftfahrzeugs gelöst ist, und
- die elektronische Steuerung empfängt ein Signal, dass das Berganfahrhilfe-System fehlerfrei arbeitet. Vorzugsweise umfasst das Berganfahrhilfe-System ein Sicherheitsrelais, welches zum Unterbrechen der signalleitenden Verbindung zwischen der elektronischen Steuerung und der Ventilanordnung in dem Fall eingerichtet, dass die elektronische Steuerung das Signal, dass das Berganfahrhilfe-System fehlerfrei arbeitet, nicht empfängt, oder ein Fehlersignal empfängt.

Die Erfindung betrifft ferner ein Kraftfahrzeug mit einem Berganfahrhilfe-System, wobei das Kraftfahrzeug eine Druckluftquelle, eine Anzahl von pneumatischen Bremsanlagen, eine pneumatische Bremsleitung, welche die Druckluftquelle mit der Anzahl von Bremsanlagen verbindet, und eine Bremspedaleinheit aufweist, welche derart mit der pneumatischen Bremsleitung kommuniziert, dass mittels der Bremspedaleinheit ein Bremsdruck eingesteuert und an die Anzahl von Bremsanlagen geleitet wird.

Die Erfindung löst die zugrunde liegende Aufgabe bei einem Kraftfahrzeug der vorbezeichneten Art, indem das Berganfahrhilfe-System nach einer der vorstehend beschriebenen bevorzugten Ausführungsformen ausgebildet ist.

Bezüglich der Vorteile bei einem solchen Kraftfahrzeug mit erfindungsgemäßem Berganfahrhilfe-System wird auf die vorstehenden Ausführungen zum Berganfahrhilfe-System verwiesen.

Es wird im Folgenden ein Ausführungsbeispiel der Erfindung detailliert beschrieben. Dieses soll das Ausführungsbeispiel nicht notwendigerweise maßstäblich darstellen. Vielmehr sind die Zeichnungen, wo zur Erläuterung dienlich, in schematisierter und/oder leicht verzerrter Form ausgeführt. Im Hinblick auf Ergänzungen der aus den Figuren unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Figuren sowie in den Ansprüchen offenbarten Merkmale der Erfindung können sowohl einzeln als auch in beliebiger Kombination für die Weiterbildung der Erfindung wesentlich ein. Zudem fallen in den Rahmen der Erfindung alle Kombinationen aus zumindest zwei der in der Beschreibung, den Figuren und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Die Erfindung wird im Folgenden unter Bezugnahme auf die beigefügten Figuren anhand eines bevorzugten Ausführungsbeispiels näher beschrieben. Hierbei zeigen:
Figur 1 eine schematische Darstellung eines Kraftfahrzeugs mit Berganfahrhilfe-System gemäß dem bevorzugen Ausführungsbeispiel, und
Figur 2 eine schematische Darstellung einer Schaltanordnung für das Berganfahrhilfe-System gemäß Figur 1.

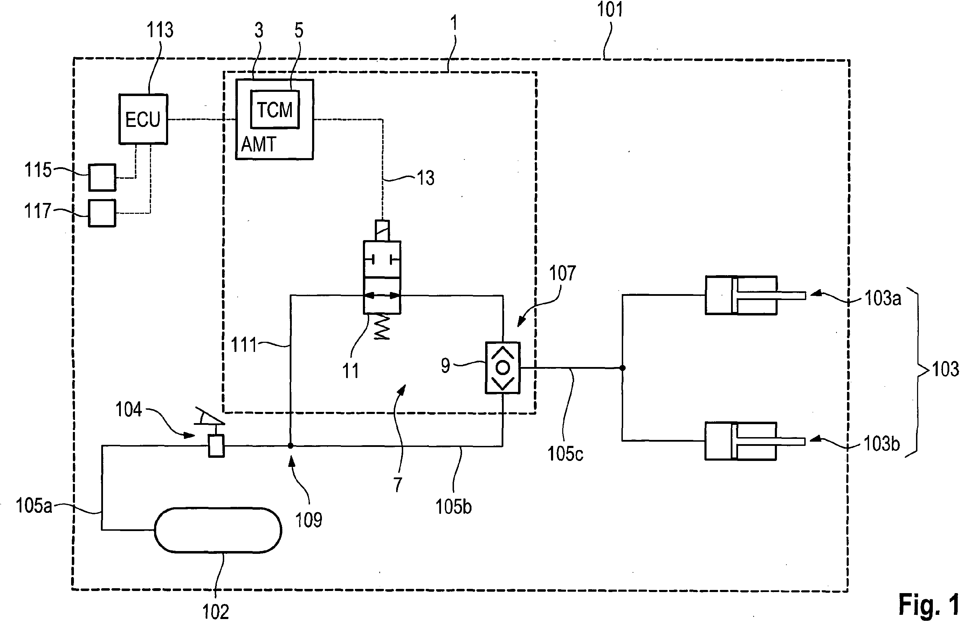

Figur 1 zeigt den schematischen Aufbau eines Kraftfahrzeugs 101. Das Kraftfahrzeug 101 kann beispielsweise ein mittlerer oder schwerer LKW ohne ABS-System sein.

Das Kraftfahrzeug 101 weist eine Anzahl von Bremsanlagen 103 auf. Dargestellt sind in Figur 1 eine erste Bremsanlage 103a und eine zweite Bremsanlage 103b. Die Bremsanlagen 103a,b umfassen jeweils Bremszylinder zum Aufbauen einer Bremskraft an den (nicht dargestellten) Rädern des Kraftfahrzeugs 101.

Die Bremsanlagen 103 sind mittels einer Bremsleitung 105a,b,c mit einer Druckluftquelle 102 verbunden. Zwischen der Druckluftquelle 102 und den Bremsanlagen 103 ist eine Bremspedaleinheit 104 zwischengeschaltet, mittels welcher ein Fahrerwunsch entsprechender Bremsdruck an die Bremsanlagen 103 eingesteuert werden kann.

Das Kraftfahrzeug 101 weist ferner eine elektronische Steuereinheit 113 auf, welche signalleitend mit einem Motor 115, beispielsweise mittels eines elektronischen Motormanagements, und mit einer Parkbremse 117 verbunden ist. Die elektronische Steuereinheit 113 ist dazu eingerichtet, diese Einheiten anzusteuern und/oder Signale über den jeweiligen Funktionszustand dieser Einheiten zu erhalten und zu verarbeiten.

Das Kraftfahrzeug 101 weist ferner ein Berganfahrhilfe-System 1 auf. Das Berganfahrhilfe-System 1 umfasst ein automatisiertes Schaltgetriebe 3 (AMT), welches mit einer elektronischen Steuerung 5 (TCM) zusammenwirkt, welche beispielsweise als Getriebe- und Kupplungssteuerung des AMT ausgebildet ist.

Zum Verwirklichen einer Berganfahrhilfe-Funktion weist das Berganfahrhilfe-System 1 eine Ventilanordnung 7 auf. Die Ventilanordnung 7 umfasst ein Magnetventil 11 und ein Doppelrückschlagventil 9.

Das Magnetventil 11 ist in einer Zweigleitung 111 angeordnet, welche an einer ersten Zweigstelle 109 von einem ersten Abschnitt 105a der Bremsleitung abgeht, und an einer zweiten Zweigstelle 107 in das Doppelrückschlagventil 9 mündet. An das Doppelrückschlagventil 9 ist zudem ein zweiter Abschnitt 105b der Bremsleitung angeschlossen. Stromabwärts von dem Doppelrückschlagventil 9 sind an dem dritten Abschnitt 105c der Bremsleitung alle Bremsanlagen so angeordnet.

Das Magnetventil 11 ist mittels einer Signalleitung 13 mit dem automatisierten Schaltgetriebe 3, insbesondere mit der elektronischen Steuerung 5 verbunden.

Im Folgenden wird der Betrieb des erfindungsgemäßen Berganfahrhilfe-Systems 1 beschrieben. In einem Normalzustand, der in Figur 1 gezeigt ist, ist die Ventilanordnung 7 in einem deaktivierten Zustand. In diesem Zustand ist das Magnetventil 11 auf Durchlass gestellt. Wird durch Betätigung der Bremspedaleinheit 104 vom Fahrer ein Bremsdruck eingesteuert, so wird dieser sowohl über die Zweigleitung 111 als auch über den zweiten Abschnitt 105b der Bremsleitung zum Doppelrückschlagventil 9 geleitet und von dort aus durch den dritten Abschnitt 105c der Bremsleitung zu den Bremsanlagen 103a,b. In der Zweigleitung 111 und in der Bremsleitung 105b ist, je nach Dimensionierung der Druckleitungen und anderer, nicht dargestellter Armaturen, der gleiche Druck ausgebildet. Wird, beispielsweise bei stehendem Fahrzeug und betätigter Bremspedaleinheit 104, so dass ein Bremsdruck an den Bremsanlagen 103 anliegt, das Magnetventil 11 mittels der elektronischen Steuerung 5 von dem in Figur 1 gezeigten Zustand in einen aktivierten Zustand überführt, ist die Zweigleitung 111 versperrt. Wenn der Fahrer nun den Fuß von der Bremspedaleinheit nimmt, so dass von der Bremspedaleinheit 104 kein weiterer Druck in Richtung der Bremslagen eingesteuert wird, kommt es zu einem Druckabfall in dem zweiten Abschnitt 105b der Bremsleitung. Das Doppelrückschlagventil 9, welches ein Select-High-Ventil ist, blockiert sodann jeglichen Fluidfluss in Richtung der Bremspedaleinheit 104 durch den zweiten Abschnitt 105b der Bremsleitung. Da aber mittels des aktivierten Magnetventils 11 die Zweigleitung 111 versperrt ist, wird der an dem Bremsanlagen 103a,b anliegende Bremsdruck in dem dritten Abschnitt 105c der Bremsleitung eingesperrt.

Eine Erhöhung des Bremsdrucks in jener Situation durch Betätigung der Bremspedaleinheit 104 ist jederzeit möglich. Wenn der vom Fahrer mittels der Bremspedaleinheit 104 eingesteuerte Bremsdruck größer ist als der eingesperrte Druck, ermöglicht das Doppelrückschlagventil durch entsprechendes Beigeben der Bremsleitung in den Abschnitten 105b,c ein Einsteuern weiterer Druckluft in Richtung der Bremsanlagen 103. Beim erneuten Druckabfall durch Freigabe des Bremspedals der Bremspedaleinheit 104 wird das Doppelrückschlagventil erneut die Sperrstellung einnehmen und auch den erhöhten Bremsdruck einsperren.

Erst wenn das Magnetventil 11 erneut in die deaktivierte Stellung gemäß Figur 1 gebracht ist, kann die Druckluft aus dem dritten Abschnitt 105c der Bremsleitung entweichen.

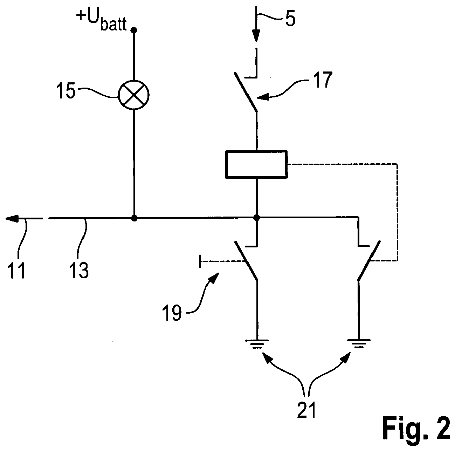

Figur 2 zeigt eine mögliche Schaltanordnung zur Erzeugung des Steuersignals entlang der Signalleitung 13 für das Magnetventil 11.

Von der elektronischen Steuerung 5 kommend ist gemäß Figur 2 ein High-Side-Schalter 17 vorgesehen, welcher manuell betätigbar ist, damit der Fahrer des Kraftfahrzeugs 101 (Figur 1) die Berganfahrhilfe-Funktion permanent ein- oder ausschalten kann. Ein Low-Side-Schalter 19 ist vorgesehen, welcher die Ausgangsseite in Richtung des Magnetventils 11 auf Masse 21 legt, um bei geschlossenem High-Side-Schalter 17 die Berganfahrhilfe-Funktion zu aktivieren, und das Magnetventil 11 zu schalten. Im aktivierten Zustand zeigt eine Signallampe 15 dem Fahrer den aktiven Zustand der Berganfahrhilfe an.

Optional ist ein zusätzlicher Low-Side-Schalter vorgesehen, welcher im Fall des Erkennens von elektrischen Fehlern zum Unterbrechen der Signalleitung eingerichtet ist.

Während die in Figur 2 gezeigte prinzipielle Schaltweise aufgrund ihrer Einfachheit und Kompatibilität mit der Spannungsversorgung U_{bat} des Kraftfahrzeugs bevorzugt wird, sind auch andere Schaltarten und Anordnungen für den Fachmann verfügbar, um das Magnetventil 11 zwischen der deaktivierten und aktivierten Stellung hin- und herbewegen zu können.

### Bezugszeichenliste (Bestandteil der Beschreibung)

- 1: Berganfahrhilfe-System
- 3: automatisiertes Schaltgetriebe
- 5: elektronischen Steuerung
- 7: Ventilanordnung
- 9: Doppelrückschlagventil
- 11: Magnetventil
- 13: Signalleitung
- 15: Signallampe
- 17: High-Side-Schalter
- 19: Low-Side-Schalter
- 21: Masse
- 101: Kraftfahrzeug
- 102: Druckluftquelle
- 103: Bremsanlagen
- 103a: erste Bremsanlage
- 103b: zweite Bremsanlage.
- 104: Bremspedaleinheit
- 105: Bremsleitung
- 105a: erster Abschnitt
- 105b: zweiter Abschnitt
- 105c: dritter Abschnitt
- 107: zweite Zweigstelle
- 109: erste Zweigstelle
- 111: Zweigleitung
- 113: elektronische Steuereinheit
- 115: Motor
- 117: Parkbremse

## Patentansprüche

1. Berganfahrhilfe-System (1) für ein Kraftfahrzeug (101), mit
- einem automatisierten Schaltgetriebe (3), das eine elektronische Steuerung (5) aufweist, und
- einer Ventilanordnung (7) zum Anschluss zwischen einer Druckluftquelle (102) und einer Anzahl von Bremsanlagen (103) des Kraftfahrzeugs (101), um Druckluft aus der Druckluftquelle (102) mittels Betätigung einer Bremspedaleinheit (104) an die Bremsanlagen (103) zu leiten,
**dadurch gekennzeichnet dass**
- die Ventilanordnung (7) signalleitend mit der elektronischen Steuerung (5) verbunden ist, und
- die elektronische Steuerung (5) dazu eingerichtet ist, die Ventilanordnung (7) derart zu aktivieren und zu deaktivieren, dass
- im deaktivierten Zustand der mittels Betätigung der Bremspedaleinheit (104) eingesteuerte Bremsdruck unbeeinflusst an die Bremsanlagen geleitet wird, und
- im aktivierten Zustand ein eingesteuerter Bremsdruck an die Anzahl von Bremsanlagen (103) geleitet und dort eingesperrt wird.

2. Berganfahrhilfe-System (1) nach Anspruch 1,
wobei die Ventilanordnung (7) zum Anschluss an eine pneumatische Bremsleitung (105a, 105b, 105c) des Kraftfahrzeugs (101) eingerichtet ist, wobei die pneumatische Bremsleitung (105a,b,c) eine Druckluftquelle (102) mit einer Anzahl von Bremsanlagen (103) verbindet und eine Bremspedaleinheit (104) derart mit der pneumatischen Bremsleitung (105a,b,c) kommuniziert, dass mittels der Bremspedaleinheit (104) ein Bremsdruck eingesteuert und an die Anzahl von Bremsanlagen (103) geleitet wird.

3. Berganfahrhilfe-System nach Anspruch 1 oder 2,
wobei die elektronische Steuerung zum Steuern der Ventilanordnung (7) derart ausgebildet ist, dass im deaktivierten Zustand der an die Anzahl von Bremsanlagen (103) geleitete Bremsdruck in Abhängigkeit der Betätigung der Bremspedaleinheit (104) steigt und fällt.

4. Berganfahrhilfe-System nach einem der Ansprüche 1 bis 3,
wobei die elektronische Steuerung zum Steuern der Ventilanordnung (7) derart ausgebildet ist, dass im aktivierten Zustand eine, insbesondere mittels der Bremspedaleinheit, eingesteuerte Bremsdruckerhöhung in der pneumatischen Bremsleitung (105a,b,c) an die Anzahl von Bremsanlagen (103) geleitet wird, während ein Druckabfall auf Seiten der Anzahl von Bremsanlagen (103) verhindert wird.

5. Berganfahrhilfe-System (1) nach einem der vorstehenden Ansprüche,
wobei die Ventilanordnung (7) ein Select-High-Ventil (9) aufweist.

6. Berganfahrhilfe-System (1) nach Anspruch 5,
wobei das Select-High-Ventil (9) an einer ersten Zweigstelle (107) der pneumatischen Bremsleitung (105a,b,c) derart angeordnet ist, dass die Anzahl von Bremsanlagen (103) fluidleitend entweder mit der pneumatischen Bremsleitung (105a,b,c), oder mit einer von der ersten Zweigstelle (107) abgehenden Zweigleitung (111) verbunden sind.

7. Berganfahrhilfe-System (1) nach einem der vorstehenden Ansprüche,
wobei die Ventilanordnung (7) ein von der elektronischen Steuerung (5) gesteuertes Schaltventil (11) aufweist.

8. Berganfahrhilfe-System (1) nach Anspruch 6 oder 7,
wobei die Zweigleitung (111) an einer zweiten Zweigstelle (109) mit der pneumatischen Bremsleitung (105a,b,c) verbunden ist, wobei die zweite Zweigstelle (109) zwischen der Bremspedaleinheit(104) und der ersten Zweigstelle (107) angeordnet ist.

9. Berganfahrhilfe-System (1) nach Anspruch 8,
wobei das Schaltventil (11) in der Zweigleitung (111) angeordnet und derart angesteuert ist, dass die Zweigleitung (111) in dem aktivierten Zustand geschlossen ist, und in dem deaktivierten Zustand geöffnet ist.

10. Berganfahrhilfe-System (1) nach einem der vorstehenden Ansprüche,
wobei die elektronische Steuerung (5) signalleitend mit einem Bedienmittel (19) verbunden und dazu eingerichtet ist, die Ventilanordnung (7) auf eine Bedieneingabe hin vom deaktivierten Zustand in den aktivierten Zustand zu schalten.

11. Berganfahrhilfe-System (1) nach einem der vorstehenden Ansprüche,
wobei die elektronische Steuerung (5) dazu eingerichtet ist, die Ventilanordnung (7) mittels Übertragung eines entsprechenden Steuersignals selbsttätig vom aktivierten Zustand in den deaktivierten Zustand zu schalten, wenn zumindest eine der folgenden Bedingungen erfüllt ist:
- die elektronische Steuerung (5) empfängt ein Signal, dass ein Schaltvorgang des automatisierten Schaltgetriebes (5) zumindest teilweise abgeschlossen ist, so dass ein vorbestimmtes Drehmoment von dem automatisierten Schaltgetriebe (3) aufgenommen wird,
- die elektronische Steuerung (5) empfängt ein Signal, dass sich die Ventilanordnung (7) im Anschluss an ein Lösen der Bremspedaleinheit (104) für einen vorbestimmten Zeitraum im aktivierten Zustand befunden hat,
- die elektronische Steuerung (5) empfängt ein Signal, dass bedienerseitig zum Beschleunigen des Kraftfahrzeugs (101) ein Kickdown ausgeführt wird, und
- die elektronische Steuerung (5) empfängt ein Signal, dass eine Parkbremse (115) des Kraftfahrzeugs (101) betätigt wird.

12. Berganfahrhilfe-System (1) nach Anspruch 10,
wobei die wobei die elektronische Steuerung (5) dazu eingerichtet ist, ein Signal an das Bedienmittel (19) zu übermitteln, wenn zumindest eine, vorzugsweise mehrere, besonders bevorzugt sämtliche der folgenden Bedingungen erfüllt sind:
- die elektronische Steuerung (5) empfängt ein Signal, dass ein Motor (117) des Kraftfahrzeugs (101) sich im Leerlauf befindet,
- die elektronische Steuerung (5) empfängt ein Signal, dass das Kraftfahrzeug (101) stillsteht,
- die elektronische Steuerung (5) empfängt ein Signal, dass die Bremspedaleinheit (104) betätigt wird,
- die elektronische Steuerung (5) empfängt ein Signal, dass das automatisierte Schaltgetriebe (3) sich in ausgekoppeltem Zustand befindet,
- die elektronische Steuerung (5) empfängt ein Signal, dass die Parkbremse (115) des Kraftfahrzeugs (101) gelöst ist, und
- die elektronische Steuerung empfängt ein Signal, dass das Berganfahrhilfe-System (1) fehlerfrei arbeitet.

13. Berganfahrhilfe-System (1) nach einem der Ansprüche 10 bis 12,
mit einem Sicherheitsrelais, welches zum Unterbrechen der signalleitenden Verbindung zwischen der elektronischen Steuerung (5) und der Ventilanordnung (7) in dem Fall eingerichtet ist, dass die elektronische Steuerung (5) das Signal, dass das Berganfahrhilfe-System (1) fehlerfrei arbeitet, nicht empfängt, oder ein Fehlersignal empfängt.

14. Kraftfahrzeug (101) mit einem Berganfahrhilfe-System (1), wobei das Kraftfahrzeug (101) eine Druckluftquelle (102), eine Anzahl von pneumatischen Bremsanlagen (103), eine pneumatische Bremsleitung (105a,b,c), welche die Druckluftquelle (102) mit der Anzahl von Bremsanlagen (103) verbindet, und eine Bremspedaleinheit (104) aufweist, welche derart mit der pneumatischen Bremsleitung (105a,b,c) kommuniziert, dass mittels der Bremspedaleinheit (104) ein Bremsdruck eingesteuert und an die Anzahl von Bremsanlagen (103) geleitet wird,
**dadurch gekennzeichnet, dass** das Berganfahrhilfe-System (1) nach einem der vorstehenden Ansprüche ausgebildet ist.

## Claims

1. Hill start assist system (1) for a motor vehicle (101), having
- an automated transmission (3), which has an electronic controller (5), and
- a valve arrangement (7) for connecting between a compressed air source (102) and a number of brake systems (103) of the motor vehicle (101), in order to conduct compressed air from the compressed air source (102) to the brake systems (103) by means of actuation of a brake pedal unit (104),
**characterized in that**
- the valve arrangement (7) is connected in a signal-conducting fashion to the electronic controller (5), and
- the electronic controller (5) is configured to activate and deactivate the valve arrangement (7) in such a way that
- in the deactivated state the brake pressure which is actuated by means of actuation of the brake pedal unit (104) is conducted without being influenced to the brake systems, and
- in the activated state an applied brake pressure is conducted to the number of brake systems (103) and shut in there.

2. Hill start assist system (1) according to Claim 1, wherein the valve arrangement (7) is configured for connection to a pneumatic brake line (105a, 105b, 105c) of the motor vehicle (101), wherein the pneumatic brake line (105a,b,c) connects a compressed air source (102) to a number of brake systems (103), and a brake pedal unit (104) communicates with the pneumatic brake line (105a,b,c) in such a way that a brake pressure is applied by means of the brake pedal unit (104) and is conducted to the number of brake systems (103).

3. Hill start assist system according to Claim 1 or 2, wherein the electronic controller is designed to control the valve arrangement (7) in such a way that in the deactivated state the brake pressure which is conducted to the number of brake systems (103) rises and falls as a function of the actuation of the brake pedal unit (104).

4. Hill start assist system according to one of Claims 1 to 3,
wherein the electronic controller is designed to control the valve arrangement (7) in such a way that in the activated state an increase in brake pressure, applied in particular by means of the brake pedal unit, in the pneumatic brake line (105a,b,c) is conducted to the number of brake systems (103), whereas a drop in pressure at the number of brake systems (103) is prevented.

5. Hill start assist system (1) according to one of the preceding claims, wherein the valve arrangement (7) has a select high valve (1).

6. Hill start assist system (1) according to Claim 5, wherein the select high valve (9) is arranged at a first branching point (107) of the pneumatic brake line (105a,b,c) in such a way that the number of brake systems (103) are connected in a fluid-conducting fashion either to the pneumatic brake line (105a,b,c), or to a branch line (111) which originates from the first branching point (107).

7. Hill start assist system (1) according to one of the preceding claims, wherein the valve arrangement (7) has a switching valve (11) which is controlled by the electronic controller (5).

8. Hill start assist system (1) according to Claim 6 or 7,
wherein the branch line (111) is connected to the pneumatic brake line (105a,b,c) at a second branching point (109), wherein the second branching point (109) is arranged between the brake pedal unit (104) and the first branching point (107).

9. Hill start assist system (1) according to Claim 8, wherein the switching valve (11) is arranged in the branch line (111) and is actuated in such a way that the branch line (111) is closed in the activated state and opened in the deactivated state.

10. Hill start assist system (1) according to one of the preceding claims, wherein the electronic controller (5) is connected in a signal-conducting fashion to an operator control means (19) and is configured to switch the valve arrangement (7) from the deactivated state into the activated state in response to an operator control input.

11. Hill start assist system (1) according to one of the preceding claims,
wherein the electronic controller (5) is configured to switch the valve arrangement (7) automatically from the activated state into the deactivated state by means of transmission of a corresponding control signal if at least one of the following conditions is met:
- the electronic controller (5) receives a signal that a switching process of the automated transmission (5) is at least partially terminated, with the result that a predetermined torque is picked up by the automated transmission (3),
- the electronic controller (5) receives a signal that the valve arrangement (7) has been in the activated state for a predetermined time period subsequent to a release of the brake pedal unit (104),
- the electronic controller (5) receives a signal that on the operator side a kick down is carried out in order to accelerate the motor vehicle (101), and
- the electronic controller (5) receives a signal that a parking brake (115) of the motor vehicle (101) is activated.

12. Hill start assist system (1) according to Claim 10, wherein the wherein the electronic controller (5) is configured to transfer a signal to the operator control means (19) if at least one, preferably a plurality, particularly preferably all, of the following conditions are met:
- the electronic controller (5) receives a signal that an engine (117) of the motor vehicle (101) is in the idling mode,
- the electronic controller (5) receives a signal that the motor vehicle (101) is stationary,
- the electronic controller (5) receives a signal that the brake pedal unit (104) is actuated,
- the electronic controller (5) receives a signal that the automated transmission (3) is in the disengaged state,
- the electronic controller (5) receives a signal that the parking brake (115) of the motor vehicle (101) is released, and
- the electronic controller receives a signal that the hill start assist system (1) is operating free of faults.

13. Hill start assist system (1) according to one of Claims 10 to 12, having a safety relay which is configured to interrupt the signal-conducting connection between the electronic controller (5) and the valve arrangement (7) in the event of the electronic controller (5) not receiving the signal that the hill start assist system (1) is operating free of faults, or receiving a fault signal.

14. Motor vehicle (101) having a hill start assist system (1), wherein the motor vehicle (101) has a compressed air source (102), a number of pneumatic brake systems (103), a pneumatic brake line (105a,b,c), which connects the compressed air source (102) to the number of brake systems (103) and has a brake pedal unit (104) which communicates with the pneumatic brake line (105a,b,c) in such a way that a brake pressure is applied by means of the brake pedal unit (104) and conducted to the number of brake systems (103),
**characterized in that** the hill start assist system (1) is embodied according to one of the preceding claims.

## Revendications

1. Système d'aide au démarrage en côte (1) destiné à un véhicule automobile (101), comportant
- une boîte de vitesses automatisée (3) qui comporte une commande électronique (5), et
- un ensemble vanne (7) permettant le raccordement entre une source d'air comprimé (102) et un certain nombre de systèmes de freinage (103) du véhicule automobile (101), pour diriger l'air comprimé de la source d'air comprimé (102) vers les systèmes de freinage (103) par actionnement d'une unité de pédale de frein (104), **caractérisé en ce que**
- l'ensemble vanne (7) est relié à la commande électronique (5) par une liaison de transmission de signaux, et
- la commande électronique (5) est conçue pour activer et désactiver l'ensemble vanne (7) de telle manière que
- à l'état désactivé, la pression de freinage appliquée au moyen de l'actionnement de l'unité de pédale de frein (104) soit dirigée librement vers les systèmes de freinage, et
- qu'à l'état activé, une pression de freinage régulée soit dirigée vers lesdits systèmes de freinage (103) et y est bloquée.

2. Système d'aide au démarrage en côte (1) selon la revendication 1,
dans lequel l'ensemble vanne (7) est conçu pour le raccordement à une conduite de freinage pneumatique (105a, 105b, 105c) du véhicule automobile (101),
dans lequel la conduite de freinage pneumatique (105a,b,c) relie une source d'air comprimé (102) à un certain nombre de systèmes de freinage (103) et une unité de pédale de frein (104) communique avec la conduite de freinage pneumatique (105a,b,c) de telle manière qu' au moyen de l'unité de pédale de frein (104) une pression de freinage soit commandée et soit dirigée vers lesdits systèmes de freinage (103).

3. Système d'assistance au démarrage en côte selon la revendication 1 ou 2,
dans lequel la commande électronique de l'ensemble vanne (7) est conçue de telle manière qu'à l'état désactivé, la pression de freinage dirigée vers lesdits systèmes de freinage (103) augmente et diminue en fonction de l'actionnement de l'unité de pédale de frein (104).

4. Système d'assistance au démarrage en côte selon l'une des revendications 1 à 3,
dans lequel la commande électronique destinée à commander l'ensemble vanne (7) est conçue de telle manière qu'à l'état activé, une augmentation de la pression de freinage dans la conduite de freinage pneumatique (105a,b,c) commandée, notamment par l'unité de pédale de frein, soit dirigée vers lesdits systèmes de freinage (103) tout en empêchant une chute de pression du côté desdits systèmes de freinage (103).

5. Système d'assistance au démarrage en côte (1) selon l'une des revendications précédentes,
dans lequel l'ensemble vanne (7) comporte une vanne de sélection haute (9).

6. Système d'assistance au démarrage en côte (1) selon la revendication 5,
dans lequel la vanne de sélection haute (9) est disposée en un premier point de dérivation (107) de la conduite de freinage pneumatique (105a,b,c) de telle manière que lesdits systèmes de freinage (103) soient reliés par conduction de fluide à la conduite de freinage pneumatique (105a,b,c) ou à une conduite secondaire (111) partant du premier point de dérivation (107) .

7. Système d'assistance au démarrage en côte (1) selon l'une des revendications ci-dessus,
dans lequel l'ensemble vanne (7) comporte une vanne de commutation (11) commandée par la commande électronique (5) .

8. Système d'assistance au démarrage en côte (1) selon la revendication 6 ou 7,
dans lequel la conduite secondaire (111) est raccordée à la conduite de freinage pneumatique (105a,b,c) en un second point de dérivation (109), dans lequel le second point de dérivation (109) est disposé entre l'unité de pédale de frein (104) et le premier point de dérivation (107) .

9. Système d'assistance au démarrage en côte (1) selon la revendication 8,
dans lequel la vanne de commutation (11) est disposée dans la conduite secondaire (111) et est actionnée de telle manière que la conduite secondaire (111) soit fermée à l'état activé et ouverte à l'état désactivé.

10. Système d'aide au démarrage en côte (1) selon l'une des revendications précédentes,
dans lequel la commande électronique (5) est reliée par une liaison de transmission de signaux à un moyen de manoeuvre (19) et est conçue pour faire passer l'ensemble vanne (7) de l'état désactivé à l'état activé en réponse à une entrée de manoeuvre.

11. Système d'assistance au démarrage en côte (1) selon l'une des revendications précédentes,
dans lequel la commande électronique (5) est conçue pour faire passer automatiquement l'ensemble vanne (7) de l'état activé à l'état désactivé par transmission d'un signal de commande correspondant lorsqu'au moins l'une des conditions suivantes est remplie :
- la commande électronique (5) reçoit un signal indiquant qu'une opération de changement de vitesse de la boîte de vitesses automatisée (5) est au moins partiellement terminée de sorte qu'un couple prédéterminé est absorbé par la boîte de vitesses automatisée (3),
- la commande électronique (5) reçoit un signal indiquant que l'ensemble vanne (7) a été dans l'état activé pendant un temps prédéterminé après un relâchement de l'unité de pédale de frein (104),
- la commande électronique (5) reçoit un signal indiquant qu'un rétrogradage est effectué par l'opérateur pour accélérer le véhicule automobile (101), et
- la commande électronique (5) reçoit un signal indiquant qu'un frein de stationnement (115) du véhicule automobile (101) est actionné.

12. Système d'assistance au démarrage en côte (1) selon la revendication 10,
dans lequel la dans lequel la commande électronique (5) est conçue pour transmettre un signal au moyen de manoeuvre (19) lorsqu'au moins l'une, de préférence une pluralité, en particulier de préférence la totalité des conditions suivantes est/sont remplie(s) :
- la commande électronique (5) reçoit un signal indiquant qu'un moteur (117) du véhicule automobile (101) tourne au ralenti,
- la commande électronique (5) reçoit un signal indiquant que le véhicule automobile (101) est à l'arrêt,
- la commande électronique (5) reçoit un signal indiquant que l'unité de pédale de frein (104) est actionnée,
- la commande électronique (5) reçoit un signal indiquant que la boîte de vitesses automatisée (3) est à l'état débrayé,
- la commande électronique (5) reçoit un signal indiquant que le frein de stationnement (115) du véhicule automobile (101) est desserré, et
- la commande électronique reçoit un signal indiquant que le système d'assistance au démarrage en côte (1) fonctionne correctement.

13. Système d'assistance au démarrage en côte (1) selon l'une des revendications 10 à 12, comportant un relais de sécurité qui est conçu pour interrompre la liaison de transmission de signaux entre la commande électronique (5) et l'ensemble vanne (7) dans le cas où la commande électronique (5) ne reçoit pas le signal indiquant que le système d'assistance au démarrage en côte (1) fonctionne correctement ou reçoit un signal de défaut.

14. Véhicule automobile (101) comportant un système d'assistance au démarrage en côte (1), dans lequel le véhicule automobile (101) comporte une source d'air comprimé (102), un certain nombre de systèmes de freinage pneumatiques (103), une conduite de freinage pneumatique (105a,b,c) raccordant la source d'air comprimé (102) auxdits systèmes de freinage (103), et une unité de pédale de frein (104) qui communique avec la conduite de freinage pneumatique (105a,b,c) de telle manière que l'unité de pédale de frein (104) commande une pression de freinage et la dirige vers lesdits systèmes de freinage (103),
**caractérisé en ce que** le système d'assistance au démarrage en côte (1) est réalisé selon l'une des revendications précédentes.
